# EUROPÄISCHE PATENTSCHRIFT

(11) **EP 2 190 696 B1**
(45) Veröffentlichungstag und Bekanntmachung des Hinweises auf die Patenterteilung: **28.09.2016**
(21) Anmeldenummer: 08774828.1
(22) Anmeldetag: 07.07.2008
(51) Int. Cl.: B60R 21/01, B60R 16/02, B60R 16/03, B60W 50/02, H04L 12/40

(54) **STEUERGERÄT UND VERFAHREN ZUR ANSTEUERUNG VON PERSONENSCHUTZMITTELN FÜR EIN FAHRZEUG**
CONTROL DEVICE AND METHOD FOR ACTIVATING PASSENGER PROTECTION MEANS FOR A VEHICLE
APPAREIL DE COMMANDE ET PROCÉDÉ DE COMMANDE DE MOYENS DE PROTECTION DE PERSONNES POUR VÉHICULE

(30) Priorität: 23.08.2007 DE 102007039835
(43) Veröffentlichungstag der Anmeldung: 02.06.2010
(73) Patentinhaber: Robert Bosch GmbH, 70442 Stuttgart (DE)
(72) Erfinder: SCHUMACHER, Hartmut, 71691 Freiberg (DE)
(86) Internationale Anmeldenummer: PCT/EP2008/058764
(87) Internationale Veröffentlichungsnummer: WO 2009/024394

(56) Entgegenhaltungen:
- EP-A- 0 834 813
- EP-A- 0 886 401
- DE-A1- 19 733 866
- DE-C1- 19 643 013

## Beschreibung

### Stand der Technik

Die Erfindung betrifft ein Steuergerät bzw. ein Verfahren zur Ansteuerung von Personenschutzmitteln für ein Fahrzeug nach der Gattung der unabhängigen Patentansprüche.

Aus DE 103 54 602 A1 ist es bereits bekannt, eine Datenkommunikation zwischem einem Steuergerät zur Ansteuerung von Personenschutzmitteln mit Verbindungselementen in einem Fahrzeugsitz zur Gewichtsmessung über einen LIN-Bus zu realisieren. Der LIN-Bus kann vorzugsweise als Ein-Draht-Bus ausgeführt sein. Mittels der Signale von den Verbindungselementen wird eine Insassenerkennung durchgeführt, in Abhängigkeit derer die Personenschutzmittel vom Steuergerät zur Ansteuerung von Personenschutzmitteln angesteuert werden.

Aus der DE 196 43 013 C1 ist ein Datenübertragungssystem für den Austausch digitaler Daten zwischen einer Zentraleinheit und mehreren mit dieser mittels eines Bussystems kommunikationsfähig verbundenen, zur Aktivierung je einer von mehreren Sicherheitseinrichtungen wie Airbags oder Gurtstrammern eines Kraftfahrzeugs, oder dergleichen, vorgesehenen, peripheren Sensormodulen bekannt. Im Datenverkehrsbetrieb der Zentraleinheit und der Steuermodule erfolgt deren Energieversorgung aus den Pufferkondensatoren. Die Übertragung der digitalen Daten von der Zentraleinheit zu den Steuermodulen und die Weiterleitung solcher Daten erfolgt durch Spannungsmodulation einer Gleichspannung , deren maximaler Spannungspegel signifikant niedriger ist als der maximale Spannungspegel, bis zu dem die Pufferkondensatoren aufladbar sind.

### Offenbarung der Erfindung

Das erfindungsgemäße Steuergerät bzw. das erfindungsgemäße Verfahren zur Ansteuerung von Personenschutzmitteln für ein Fahrzeug mit den Merkmalen der unabhängigen Patentansprüche haben demgegenüber den Vorteil, dass eine Maßnahme vorgeschlagen wird, mit der auch in einem sogenannten Autarkiefall die Kommunikation über die Schnittstelle weiterhin gewährleistet wird. Der Autarkiefall tritt typischerweise bei einem Unfall auf, bei dem es zu einem Fahrzeugbatterieabriss kommt. Auch bei Kontaktproblemen bezüglich der Fahrzeugbatteriespannung hilft die Erfindung im gleichen Maße.

Durch die Ableitung der Schaltschwelle von einer im Steuergerät erzeugten Versorgungsspannung oder aus der Amplitude des empfangenen Signals (bspw. eine Busspannung) selbst kann in einfacher Art und Weise eine stabile Detektion des ankommenden Signals erreicht werden. Im Nichtautarkiefall kann die Schaltschwelle von der Fahrzeugbatteriespannung direkt abgeleitet werden.

Durch die Erfindung wird erreicht, dass beispielsweise der LIN-Spezifikation in vollem Umfang genügt wird. Durch die Erfindung wird eine Notlaufeigenschaft ohne Rückwirkung im Gültigkeitsbereich der LIN-Spezifikation im Design erreicht und die Schnittstelle bzw. das erfindungsgemäße Verfahren werden so ausgeführt, dass auch unter schwierigen Spannungsverhältnissen eine robuste Signalerkennung möglich ist.

Die Ableitung der mitlaufenden Schaltschwelle kann daher direkt aus der Bus-Spannung erfolgen. Hierzu wird beispielsweise über eine übliche Spitzenspannugsschaltung mit geeigneter Zeitkonstante die Bus-Ruhespannung ermittelt und mit nachfolgendem Teiler die Datenschaltschwelle erzeugt.

Durch die Erfindung wird erreicht, dass ein Zusatzaufwand in der Schnittstelle, um ihre Funktion auch außerhalb der LIN-Standardisierung zu ermöglichen, entfällt. Die LIN-Standardisierung schlägt beispielsweise eine Batteriespannung von 8 bis 18V vor.

Die im Autarkiefall oder bei Kontaktproblemen fehlende Fahrzeugbatteriespannung, die normalerweise zur Definition der Schaltschwelle dient, wird durch eine feste interne Schaltschwelle simuliert. Dadurch ist eine Kommunikation in einem LIN-Bus-System weiterhin möglich.

Ein Steuergerät ist vorliegend ein elektrisches Gerät, das Sensorsignale verarbeitet, beispielsweise mit einem Auswertealgorithmus und in Abhängigkeit davon, ein Ansteuersignal für Personenschutzmittel für ein Fahrzeug erzeugt. Ansteuern bedeutet dabei, dass diese Personenschutzmittel aktiviert werden. Dies kann beispielsweise auch in Stufen geschehen. Als Personenschutzmittel kommen Airbags, Gurtstraffer, aber auch aktive Personenschutzmittel wie eine Fahrdynamikregelung oder Bremsen in Frage.

Unter einer Schnittstelle ist vorliegend eine Hardware oder eine Software zu verstehen. Auch eine Kombination daraus kann die Schnittstelle bilden. Als Hardwarerealisierungen kommen integrierte Schaltungen, diskrete Schaltungen oder Kombinationen daraus in Frage. Die Schnittstelle kann auch durch ein Softwaremodul auf einem Prozessor, wie beispielsweise einem Mikrocontroller, gebildet werden.

Das empfangene Signal ist, wie oben angegeben, beispielsweise ein LIN-Bus-Signal. Es sind jedoch auch andere Bussignale möglich. Auch Signale von einer Punkt-zu-Punkt-Verbindung, beispielsweise über eine Stromschnittstelle, können als das Signal im erfindungsgemäßen Sinne dienen. Das Signal kann auch ein Multiplex von mehreren Signalen sein. Dieses Signal wird von der Amplitude der Fahrzeugbatteriespannung üblicherweise abgeleitet und ist daher bei einem Abriss Schwankungen unterlegen. Die Signalamplitude bietet jedoch auch eine Möglichkeit, die Schaltschwelle zur Detektion des Signals abzuleiten.

Die Ansteuerschaltung kann eine Hard- und/oder Softwareausführung sein. Die Ansteuerschaltung umfasst nicht nur die Auswertung von dem Signal, das empfangen wird, sondern auch die Erzeugung des Ansteuersignals für die Personenschutzmittel. Dabei kann die Ansteuerschaltung beispielsweise aus einem Mikrocontroller und der Schaltung, die die Leistungsschalter für das Zuschalten des Zündstroms zu den Personenschutzmitteln bewirkt, umfassen.

Die erfindungsgemäße Schaltung kann ebenfalls hard- und/oder softwaremäßig ausgeführt sein. Insbesondere kann sie als Teil einer integrierten Schaltung vorhanden sein. Die Detektion des Signals ist bei einem Empfang des Signals eine wesentliche Aktion, um dieses Signal auswerten zu können. Dabei muss beispielsweise bei einem digitalen Signal ein sicherer Unterschied zwischen einer 0 und einer 1 hergestellt werden. Dafür wird die Schaltschwelle verwendet. Diese Schaltschwelle muss zuverlässig abgeleitet werden. Dafür dient erfindungsgemäß eine im Steuergerät erzeugte Versorgungsspannung oder die Signalamplitude selbst. Die im Steuergerät erzeugten Versorgungsspannungen werden robust aus der Fahrzeugbatteriespannung und im Autarkiefall, also bei einem Abriss der Fahrzeugbatterie, aus einer Energiereserve gebildet.

Durch die in den abhängigen Ansprüchen aufgeführten Maßnahmen und Weiterbildungen sind vorteilhafte Verbesserungen des in den unabhängigen Patentansprüchen angegebenen Steuergeräts bzw. Verfahrens zur Ansteuerung von einem Personenschutzmittel für ein Fahrzeug möglich.

Es ist dabei vorteilhaft, dass ein Versorgungsbaustein vorgesehen ist, der die Versorgungsspannung als digitale Pegel erzeugt. In einem Steuergerät sind mehrere digitale Pegel, beispielsweise 5V und 3,3V notwendig, um die vorhandenen Baugruppen des Steuergeräts mit Energie zu versorgen. Dies wird durch den Versorgungsbaustein erreicht. Der Versorgungsbaustein kann dabei beispielsweise einen Aufwärtswandler, einen Abwärtswandler und einen linearen Regler aufweisen. Diese Wandler sind üblicherweise als Schaltwandler ausgeführt. Da diese Energieversorgung in einem Steuergerät zur Ansteuerung von Personenschutzmitteln sehr robust ausgeführt ist, ist es äußerst vorteilhaft, von dieser Versorgungsspannung die Schaltschwelle zur Detektion des Signals zu verwenden. Die digitalen Pegel, die der Versorgungsbaustein für das Steuergerät erzeugt, sind eine sichere Basis, um die Schaltschwelle abzuleiten.

Es ist weiterhin von Vorteil, dass die Schnittstelle mit der Schaltung und dem Versorgungsbaustein einen integrierten Schaltkreis bildet. Dadurch können äußerst günstig für solche Steuergerät integrierte Schaltkreise hergestellt werden, die kostengünstig sind und eine hohe Zuverlässigkeit aufweisen. Neben dem Versorgungsbaustein und der Schnittstelle mit der erfindungsgemäßen Schaltung können auch weitere Funktionen in diesem integrierten Baustein vorhanden sein. Dazu zählen beispielsweise Airbagfunktionen wie eine redundante Prüfung der Sensorsignale im Vergleich zum Mikrocontroller. Damit ist ein sogenannter Safety Controller realisiert, der die notwendige Sicherheit für das Steuergerät durch eine redundante Auswertung der Sensorsignale erreicht und die Zündschaltung freigibt, nur wenn er auch erkennt, dass ein Ansteuerungsfall vorliegt. Weitere Schnittstellen und Funktionen können auf dem erfindungsgemäßen integrierten Schaltkreis enthalten sein.

Es ist weiterhin von Vorteil, dass die Detektion mit der Schaltschwelle durch einen ersten Vergleicher, beispielsweise einen Komparator erreicht wird, an dessen einen Eingang über einen Widerstand und eine Diode die Schaltschwelle aus der Versorgungsspannung anliegt, wobei an diesem einen Eingang ebenfalls die Fahrzeugbatteriespannung anliegt, beispielsweise auch über eine Diode und einen Widerstand, so dass letztlich die Spannung die Schaltschwelle an dem Vergleicher bildet, die einen höheren Wert aufweist. Durch die Verwendung der Dioden in Flussrichtung wird der Zweig gesperrt, der eine niedrigere Spannung aufweist als der andere Zweig. Damit dominiert im Autarkiefall der Zweig mit der Diode und dem Widerstand und der Versorgungsspannung. Es muss dabei wenigstens ein Widerstand und wenigstens eine Diode verwendet werden. Alternativ ist es möglich, noch mehrere Bauelemente zu verwenden. Dieser Eingang des Vergleichers ist über mindestens einen Widerstand gegen Masse geschaltet. Ein weiterer Widerstand kann zur Ezeugung eine geeigneten Hysterese verwendet werden. Dieser Widerstand ist mit dem Widerstand, der gegen Masse geschaltet ist, in Reihe geschaltet.

Alternativ ist es vorteilhaft, zwei Vergleicher und beispielsweise dabei Komparatoren zu verwenden, wobei der erste Vergleicher mit der Fahrzeugbatteriespannung die Schaltschwelle bildet und der zweite Vergleicher mit aus der erfindungsgemäß gewählten Versorgungsspannung. Reisst die Fahrzeugbatteriespannung ab, dann wird der Komparator, der die Schaltschwelle aus der Fahrzeugbatteriespannung ableitet, bei einem Batterieabriss immer eine Detektion einer logischen 1 feststellen und somit bei einer Verundung mit dem zweiten Ausgangssignal des zweiten Komparators im Autarkiefall nicht stören. Denn nur, wenn auch der zweite Vergleicher einer logischen Eins feststellt, wird als Detektion eine logische Eins erkannt. Stellt der zweite Vergleicher, dessen Schaltschwelle aus der Versorgungsspannung abgeleitet wird, eine logische Null fest, dann wird auch diese logische Null als Detektion erkannt. Die Ableitung aus der Versorgungsspannung bedeutet nicht, dass die Versorgungsspannung unmittelbar verwendet wird, sondern beispielsweise ein Zwischenwert oder ein von der Versorgungsspannung selbst abgeleiteter Wert. Es ist jedoch möglich, unmittelbar die Versorgungsspannung zu verwenden.

Vorteilhafter Weise wird die Schaltschwelle mittels einer Hystereseschaltung hergestellt. Die Hysterese als Schaltschwelle hat eine große Robustheit gegenüber einer festen Schaltschwelle. Zur Realisierung der Hysterese können dem Fachmann bekannte Schaltungen verwendet werden.

Es ist weiterhin vorteilhaft, dass die Schnittstelle dahingehend weitergebildet werden kann, dass sie auch zum Versenden von Daten im Autarkiefall ausgebildet wird. Dazu kann eine sogenannte Pull-Up-Schaltung verwendet werden. Diese Pull-Up-Schaltung kann vorzugsweise aus der Versorgungsspannung oder einer davon abgeleiteten Spannung oder einer Spannung, aus der die Versorgungsspannung abgeleitet wird, über wenigstens einen Widerstand und eine Diode diese Spannung an die Übertragungsleitung, den LIN-Bus, führen. Diese Spannung kann dann mit dem Informationsgehalt moduliert werden.

Ausführungsbeispiele der Erfindung sind in der Zeichnung dargestellt und werden in der nachfolgenden Beschreibung näher erläutert.

Es zeigen
Figur 1 ein Blockschaltbild des erfindungsgemäßen Steuergeräts im Fahrzeug,
Figur 2 einen Ausschnitt des erfindungsgemäßen Steuergeräts beim erfindungsgemäßen Empfang des Signals von einem weiteren Steuergerät,
Figur 3 ein Ausführungsbeispiel der erfindungsgemäßen Schaltung,
Figur 4 ein weiteres Ausführungsbeispiel der erfindungsgemäßen Schaltung,
Figur 5 ein weiteres Ausführungsbeispiel der erfindungsgemäßen Schaltung und
Figur 6 ein Flussdiagramm des erfindungsgemäßen Verfahrens.

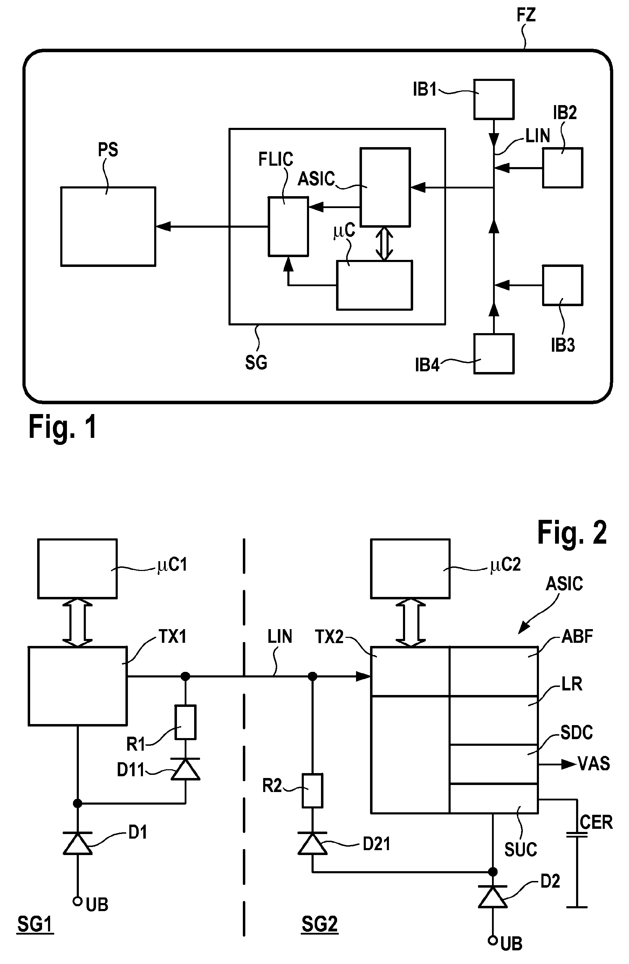

Figur 1 zeigt das erfindungsgemäße Steuergerät SG in einem Fahrzeug FZ mit angeschlossenen Komponenten. An das Steuergerät SG sind vorliegend Sitzkraftsensoren IB1 bis 4 über einen LIN-Bus LIN an einen integrierten Schaltkreis ASIC, der die erfindungsgemäße Schnittstelle mit der erfindungsgemäßen Schaltung aufweist, angeschlossen. Der integrierte Schaltkreis ASIC ist über einen Datenein-/ausgang mit dem Mikrocontroller µC, also der Ansteuerungsschaltung verbunden, um beispielsweise die Daten, die der ASIC über den LIN-Bus LIN detektiert, zur weiteren Auswertung weiterzugeben. Der Mikrocontroller µC bestimmt in Abhängigkeit von diesen Daten, ob die Personenschutzmittel angesteuert werden sollen. Daraufhin überträgt er beispielsweise über den sogenannten SPI-Bus einen Ansteuerungsbefehl an die Schaltung FLIC, die die Zündschalter beinhaltet. Aber auch der ASIC weist eine parallele Auswertung von Signalen auf, die crashrelevant sind und gibt die Schaltung FLIC nur dann frei, wenn auch der ASIC einen solchen Ansteuerungsfall erkennt. Im Ansteuerungsfall werden die Personenschutzmittel PS aktiviert.

Vorliegend sind nur die für die Erfindung notwendigen Elemente dargestellt. Das Steuergerät SG weist weitere Baugruppen auf, um seinen Betrieb sicherzustellen, wobei diese Baugruppen jedoch für das Verständnis der Erfindung nicht notwendig sind. Auch weitere externe Komponenten wie Unfallsensoren können an das Steuergerät SG angeschlossen sein. Auch diese sind der Einfachheit halber nicht dargestellt worden.

Erfindungsgemäß vermag nun der ASIC im sogenannten Autarkie-Fall oder bei einem Kontaktproblem der Fahrzeugbatteriespannung die Daten vom LIN-Bus mit einer zuverlässigen Schaltschwelle zu detektieren. Diese Schaltschwelle wird dabei vorzugsweise von einer im ASIC bereitgestellten Versorgungsspannung, beispielsweise einem digitalen Pegel, abgeleitet. Alternativ ist es möglich, von der Signalamplitude der Signale über den LIN-Bus diese Schaltschwelle abzuleiten. Damit kann dann im Autarkie-Fall für eine gewisse Zeit eine weitere Auswertung der Signale über dem LIN-Bus erfolgen. Die Autarkie wird im Steuergerät durch die in Figur 1 nicht dargestellte Energiereserve meist ein oder mehrere Kondensatoren bereitgestellt.

Figur 2 zeigt Ausschnitte des erfindungsgemäßen Steuergeräts SG2, das mit einem weiteren Steuergerät SG1 über den LIN-Bus LIN kommuniziert. Das weitere Steuergerät SG1 weist einen Mikrocontroller µc1 auf, der beispielsweise Sensordaten aufbereitet. Diese aufbereiteten Sensordaten werden vom Mikrocontroller µc1 zu einem Tranceiver TX1 übertragen, der in der Lage ist, diese aufbereiteten Sensorsignale über den LIN-Bus LIN zu übertragen. Die Spannungen für die Übertragung und den Betrieb des Tranceivers TX1 werden von der Batteriespannung UB bereitgestellt. Dafür wird eine Diode D1 als Verpolschutz verwendet. Weiterhin wird die Sendespannung über eine weitere Diode D11 und einen Widerstand R1 an dem LIN-Bus LIN bereitgestellt. Beide Dioden D1 und D11 sind in Flussrichtung gepolt.

Im erfindungsgemäßen Steuergerät SG2 wird der LIN-Bus LIN an den integrierten Schaltkreis ASIC angeschlossen und dabei an die Schnittstelle TX2, die hier ebenfalls als Tranceiver für den LIN-Bus ausgebildet ist. Der Tranceiver TX2 ist ein Teil des integrierten Schaltkrieses ASIC. Der ASIC weist weitere Airbagfunktionen ABF auf, wie beispielsweise den oben genannten Safety-Controller. Weiterhin weist der ASIC die Baugruppen zur Bereitstellung der Versorgungsspannungen für das Steuergerät SG2 auf. Dazu ist hier beispielhaft ein Aufwärtswandler SUC, ein Abwärtswandler SDC und ein Linearregler LR dargestellt. Der Abwärtswandler SDC stellt die erfindungsgemäß wichtige Versorgungsspannung VAS bereit, aus der die Schaltschwelle abgeleitet wird. In den Aufwärtswandler SUC geht die Batteriespannung UB nach einer Verpolschutzdiode D2 ein, und im Autarkiefall die Spannung aus der Energiereserve CER. Dies ist vorliegend vereinfacht dargestellt. Es können Schaltelemente zwischen der Energiereserve CER und dem Aufwärtswandler SUC vorhanden sein. Weiterhin werden nach der in Flussrichtung gepolten Diode D2 ein Zweig zum Tranceiver von der Batteriespannung vorgesehen, der ebenfalls eine in Flussrichtung gepolte Diode D21 aufweist, und einen Widerstand R2. Dies findet im Steuergerät SG1 seine Entsprechung in der Diode D11 und dem Widerstand R1. Über diese Spannung wird der Tranceiver TX2 direkt im Nichtautarkiefall mit der Spannung versorgt, aus der er seine Schaltschwelle aus der Fahrzeugbatteriespannung ableiten kann. Über diesen Pfad wird die Sendespannung über R1 mit vorgegeben. Jede zu R1, D11 analoge Pull-Up Struktur trägt zur stabilen Bereitstellung der BUS Ruhespannung (High-Pegel) bei, der Masterknoten am deutlichsten da sein Pull-up Widerstand beispielsweise 1KOhm gegenüber ca. 30kOhm Slave beträgt. Bildet SG2 den Masterknoten, gibt der Tranceiver TX2 im Nichtautarkiefall über R1, D11 im wesentlichen die BUS-Sendespannung vor. Aus der verpolgeschützten Batteriespannung nach D2 leitet er in diesem Falle eine zum Empfang von LIN-Daten geeignete Schaltschwelle ab.

Wiederum sind nur die für die Erfindung notwendigen Elemente dargestellt. Weitere Elemente, die das Steuergerät SG2 bzw. das Steuergerät SG1 aufweisen, sind der Einfachheit halber weggelassen worden. Das Steuergerät SG1 kann beispielsweise ein Steuergerät sein, welches Daten mehrerer Gewichtsensoren verarbeitet und diese Informationen über die Sitzbelegungen an das Airbag-Steuergerät SG2 überträgt, so dass die Ansteuerung der Personenschutzmittel in Abhängigkeit dieser Daten, beispielsweise im Hinblick auf eine Personenklassifizierung stattfindet.

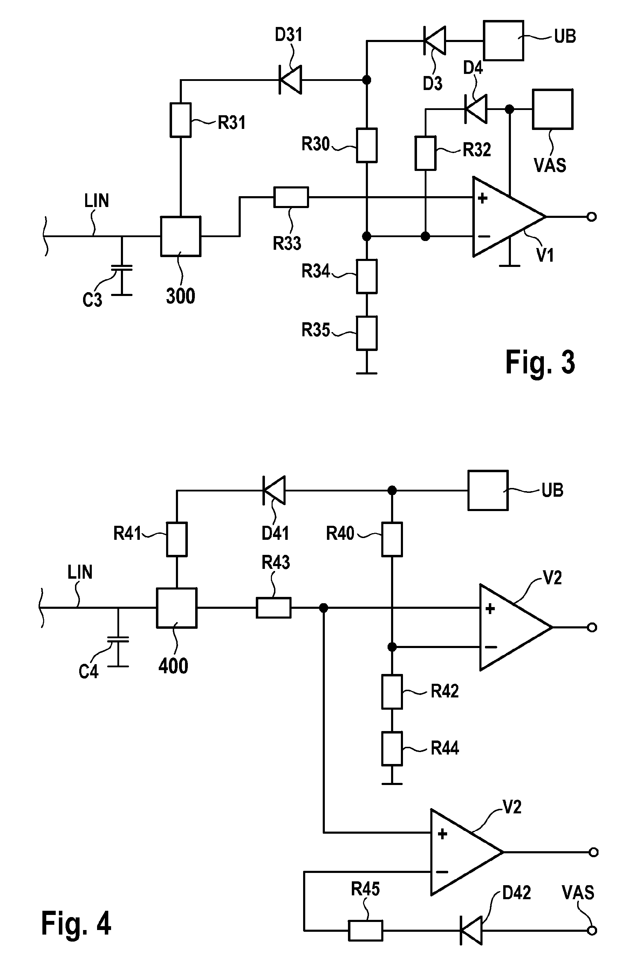

Figur 3 zeigt eine Ausprägung der erfindungsgemäßen Schnittstelle mit der Schaltung, die die Schaltschwelle erfindungsgemäß bildet. Vorliegend wird als Vergleicher der Komparator V1 verwendet. In diesen Vergleicher V1 geht das vom LIN-Bus LIN übertragene Signal über einen Anschluss 300 und einen Widerstand R33 direkt auf den positiven Eingang des Komparators V1 ein. Dieses LIN-Bus-Signal wird mit einer Schaltschwelle verglichen, die am negativen Eingang des Komparators V1 anliegt. Die Schaltschwelle wird dabei entweder aus der Batteriespannung UB über die Verpolschutzdiode D3 und den Widerstand R3 sowie den Spannungsteiler R34 und R35 gebildet, oder aus der steuergeräteinternen, sowohl aus Batteriespannung als auch aus der Energiereserve Spannung abgeleiteten Spannung VAS über die Diode D4 und den Widerstand R32 und dann wiederum über den Spannungsteiler R34 und R35 gebildet. Durch die in Flussrichtung gepolten Dioden D3 und D4 wird sie jeweils die höhere Spannung UB oder VAS durchsetzen, um die Schaltschwelle zu bilden. Ist das Signal des LIN-Busses LIN größer als die dadurch gebildete Schaltschwelle, wird der Komparator V1 eine logische 1 ausgeben, ansonsten eine logische 0. Dadurch erhält man eine Schaltschwelle die auch im Autarkiefalle, bei zu kleiner Batteriespannung oder bei Kontaktproblemen (Mikrounterbrechungen) sicher gebildet werden kann. Anstatt der sogenannten analogen Spannung VAS können auch aus dieser durch weitere Spannungsregler gebildete Digitalspannungen des Steuergerätes eingesetzt werden, da auch diese im Autarkiefall erhalten bleiben.

An die in Flussrichtung gepolte Diode D3 ist weiterhin die Diode D31 und der Widerstand R31 in Serie mit dem Anschlusspunkt 300 verbunden. Diese Pull-up Struktur bildet entsprechend der Norm den Bus-High-Pegel im Ruhezustand des Busses (kein Datenverkehr), für den Slave R31=1kOhm, für den Master 30kOhm. Im Falle der Datenübertragung wird der Transmitter-Transistor/ steuerbare Stromquelle im Rhythmus des Dateninhalts über eine Diode nach Masse am Punkt 300 wirksam (gesteuert durch TxD) und zieht die Spannung am BUS auf einen dominanten Low-Pegel. Dies kann in jeder vergleichbaren Transmitter-Struktur der am BUS befindlichen Einrichtungen geschehen.

Der Kondensator C3 dient dazu Hochfrequenzstörungen auf dem Bus zum Empfänger hin zu filtern, bzw. zusammen mit der Charakteristik des Transmitter-Transistors/steuerbare Stromquelle oder dem Pull-Up R31 die ensprechende Flankensteilheit der Sendeimpulse (fallend / steigend) festzulegen und damit die Abstrahlung reduzieren.

Vorliegend ist nur der für die Erfindung notwendige Teil dargestellt. Weggelassen wurde beispielsweise die Hystereseschaltung, die dafür sorgt, dass die Schaltschwelle einer Hysterese folgt, um sie robuster auszugestalten. Ein Fachmann weiss, wie eine solche Hystereseschaltung über Transistoren und Operationsverstärker auszuführen ist.

Der Ausgang des Vergleichers V1 bildet die Grundlage zur Erzeugung des Empfänger-Signales RxD des Tranceivers. Im einfachsten Falle sind Sie identisch, in robusteren Systemen kann eine weitere Signalentstörung über ein digitales Filter vorgenommen werden.

Figur 4 zeigt eine alternative Ausgestaltung. Die Bauelemente C4, 400, R41 und D41 entsprechen den Bauelementen D31, R31 und dem Anschlusspunkt 300 sowie dem Kondensator C3 in Figur 3. Der Widerstand R33 findet seine Entsprechung in Figur 4 im Widerstand R43.

Vorliegend wird die Verwendung von zwei Vergleichern V2 und V3 wiederum als Komparatoren ausgebildet vorgeschlagen. Dabei wird an den ersten Vergleicher V2 die Batteriespannung UB über den Spannungsteiler R40, R42 und R44 an den negativen Eingang angeschlossen, um ihn mit dem Eingangssignal über den LIN-Bus LIN für die Detektion des Signals zu vergleichen. Dieses Eingangssignal wird jedoch auf einen weiteren Komparator V3 und wiederum an den positiven Eingang gegeben. An den negativen Eingang dieses zweiten Komparators V3 ist wiederum über eine Diode D42 und einen Widerstand R45 die analoge auch im Autarkiefall vorhandene Versorgungsspannung VAS zur Bildung der Schaltschwelle angeschlossen.

Im Nichtautarkiefall wird der zweite Komparator V3 immer eine logische Eins ausgeben, da die Schwelle, gebildet aus VAS, geringer ausgebildet ist als die Schaltschwelle, die aus der Fahrzeugbatteriespannung UB abgeleitet ist. Durch eine sogenannte Wired-Or-Verknüpfung der Komparatoren V2 und V3 kann damit erreicht werden, dass im Nichtautarkiefall sich das Signal des Komparators V2 als bestimmend durchsetzt. Umgedreht ist der Fall im Autarkiefall. Dabei wird der Komparator V2 immer eine logische 1 ausgeben, während der Komparator V3 durch die Schaltschwelle aus der Versorgungsspannung VAS das Signal richtig detektiert.

Die Ausgänge der Vergleicher V1 und V3 durch wired or verknüpft bilden die Grundlage zur Erzeugung des Empfänger-Signales RxD des Tranceivers. Im einfachsten ist er identisch, in robusteren Systemen kann eine weitere Signalentstörung über ein digitales Filter nach der Verknüpfung oder jeweils vorher vorgenommen werden.

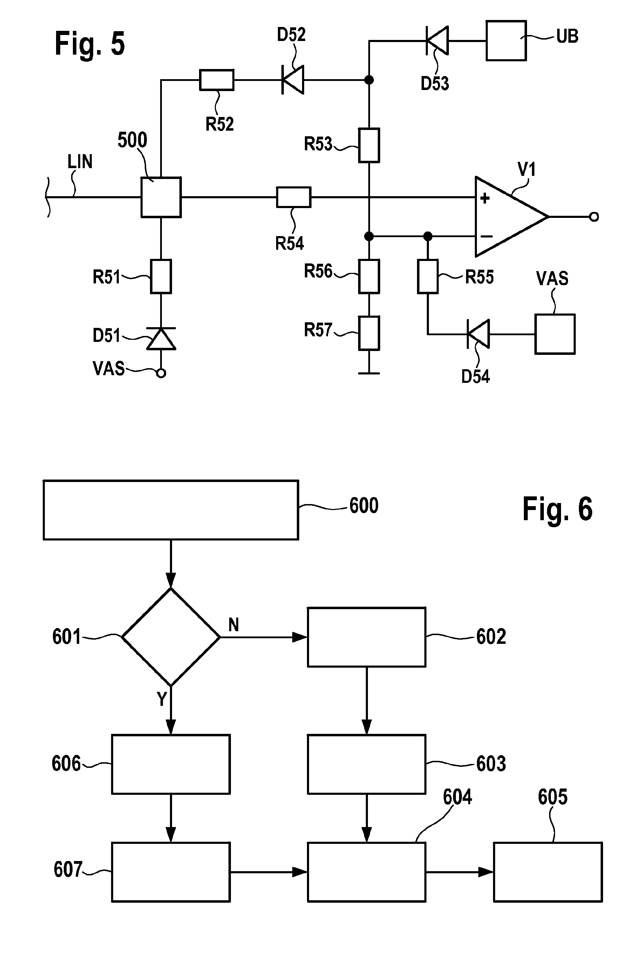

Figur 5 zeigt ein weiteres Ausführungsbeispiel der erfindungsgemäßen Schaltung. Nunmehr wird wiederum nur ein Vergleicher V1 verwendet, an den sowohl die Batteriespannung UB über die Diode D53 und R53 und die digitale Versorgungsspannung VAS über den Widerstand R55 und die Diode 455 in der in Figur 3 beschriebenen Weise angeschlossen sind. Der LIN-Bus ist über die Schnittstelle 500 und den Widerstand R54 an den positiven Eingang des Vergleichers V1 angeschlossen. Durch die Widerstände R56 und R57, die an den negativen Eingang des Komparators V1 angeschlossen sind, wird der oben beschriebene Spannungsteiler gebildet. Die Batteriespannung wird über die Diode D53, D52 und den Widerstand R52 an den Anschlusspunkt 500 geführt, der mit dem LIN-Bus verbunden ist. Bei dem LIN-Bus handelt es sich wie gesagt um einen Eindrahtbus. Weiterhin ist an den Anschlusspunkt 500 die Versorgungsspannung VAS über die Diode in Flussrichtung D51 und R51 angeschlossen. Auch hier wird sich die höhere Spannung durch die in Flussrichtung gepolten Dioden letztlich durchsetzen. Durch die Schaltung R51, D51 und VAS wird eine sogenannte Pull-Up-Schaltung realisiert, so dass der LIN BUS auch im Falle der Autarkie des Airbag Steuergerätes mit der BUS-Ruhespannung versorgt wird (zB. Master Pull-up) . Im Falle einer Konfiguration aus Airbag Steuergerät und Gewichtsensierungssystem (Gewichtssensierungsystem ebenfalls vom Airbag SG im Autarkiefalle versorgt) notwendig, um die Schnittstelle auch zum Versenden von Daten sowohl vom Master (Airbag) als auch vom Slave Knoten (Gewichtssensorik) mit geeigneter BUS-Spannung zu versorgen.

Das Flussdiagramm in Figur 6 zeigt das erfindungsgemäße Verfahren. In Verfahrensschritt 600 wird das LIN-Signal empfangen. Im Verfahrensschritt 601 wird geprüft, ob der Autarkiefall vorliegt oder nicht. Liegt er nicht vor, dann wird in Verfahrensschritt 602 die Schaltschwelle mittels der Batteriespannung gebildet, so dass dann in Verfahrensschritt 603 die Detektion des LIN-Signals mit dieser Schaltschwelle erfolgt. Im Verfahrensschritt 604 wird beispielsweise im Mikrocontroller µC die Verarbeitung der detektierten Signale vorgenommen. Im Verfahrensschritt 605 erfolgt dann die Ansteuerung in Abhängigkeit von dieser Verarbeitung.

Wurde in Verfahrensschritt 601 festgestellt, dass ein Autarkiefall vorliegt, dann erfolgt in Verfahrensschritt 606 die Bildung der Schaltschwelle aus einer analogen Autarkie unabhängigen Versorgungsspannung des Steuergerätes. Diese Versorgungsspannung ist in den Ausführungsbeispielen die Spannung VAS. Sie sollte sinnvollerweise ca. 6.3 ..8V aufweisen, um direkt mit dem untersten Wert der LIN Spezifikation UB=8V vergleichbare Spannungsniveaus am BUS zu erreichen, abhängig davon ob Si-Dioden (Mindestanforderung nach Norm) Shottky Dioden oder sogar Back to Back geschaltete MOS-FET Transistoren als Dioden D4 in Fig.3, D42 in Fig.4, D54, D51 in Fig.5 zum Einsatz kommen. Im Verfahrensschritt 607 erfolgt dann die Detektion mit dieser gebildeten Schaltschwelle, um dann ebenfalls in Verfahrensschritt 604 für die Verarbeitung der detektierten Signale einzumünden.

## Patentansprüche

1. Steuergerät (SG) zur Ansteuerung von Personenschutzmitteln (PS) für ein Fahrzeug (FZ) mit einer Schnittstelle (TX2) zum Empfang von wenigstens einem Signal, dessen Amplitude von der Fahrzeugbatteriespannung (UB) abhängt, wobei eine Ansteuerschaltung (µC) vorgesehen ist, die die Personenschutzmittel (PS) in Abhängigkeit von dem wenigstens einen Signal ansteuert, wobei die Schnittstelle (TX2) eine Schaltung aufweist, die zur Detektion des wenigstens eines Signals im Autarkiefall bei einem Unfall, bei dem es zu einem Fahrzeugbatterieabriss kommt, wenigstens eine Schaltschwelle aus einer im Steuergerät erzeugten Versorgungsspannung (VAS) oder aus der Amplitude ableitet.

2. Steuergerät nach Anspruch 1, **dadurch gekennzeichnet, dass** ein Versorgungsbaustein die Versorgungsspannung (VAS) als einen digitalen Pegel erzeugt.

3. Steuergerät nach Anspruch 2, **dadurch gekennzeichnet, dass** die Schnittstelle (TX2) mit der Schaltung und dem Versorgungsbaustein einen integrierten Schaltkreis (ASIC) bilden.

4. Steuergerät nach einem der vorhergehenden Ansprüche, **dadurch gekennzeichnet, dass** die wenigstens eine Schaltschwelle an einem ersten Vergleicher (V1) dadurch erzeugt wird, dass ein Eingang des ersten Vergleichers (V1) über wenigstens einen ersten Widerstand (R32) und wenigstens eine erste Diode (D4) mit der Versorgungsspannung (VAS) beaufschlagt ist, wobei an diesem Eingang die Fahrzeugbatteriespannung (UB) ebenfalls anliegt.

5. Steuergerät nach einem der Ansprüche 1 bis 3, **dadurch gekennzeichnet, dass** ein zweiter Vergleicher (V3) vorgesehen ist, an dessen ersten Eingang die wenigstens eine Schaltschwelle aus der Versorgungsspannung (VAS) anliegt und dass ein dritter Vergleicher (V2) vorgesehen ist, an dessen ersten Eingang die Fahrzeugbatteriespannung (UB) zur Bildung der wenigstens einen Schaltschwelle vorgesehen ist.

6. Steuergerät nach einem der vorhergehenden Ansprüche, **dadurch gekennzeichnet, dass** für eine Erzeugung der wenigstens einen Schaltschwelle eine Hystereseschaltung vorgesehen ist.

7. Steuergerät nach einem der vorhergehenden Ansprüche, **dadurch gekennzeichnet, dass** die Schnittstelle für ein Versenden von Daten eine Pull-Up-Beschaltung (R51, D51) aufweist.

8. Steuergerät nach Anspruch 7, **dadurch gekennzeichnet, dass** die Pull-Up-Schaltung mittels wenigstens eines zweiten Widerstands und wenigstens einer zweiten Diode die Versorgungsspannung an eine Übertragungsleitung führt.

9. Verfahren zur Ansteuerung von Personenschutzmitteln (PS) für ein Fahrzeug (FZ), wobei mittels einer Schnittstelle (TX2) wenigstens ein Signal empfangen wird, wobei eine Amplitude des wenigstens einen Signals von der Fahrzeugbatteriespannung abhängt, wobei die Personenschutzmittel (PS) in Abhängigkeit von dem wenigstens einen Signal angesteuert werden, **dadurch gekennzeichnet, dass** zur Detektion des wenigstens einen Signals im Autarkiefall bei einem Unfall, bei dem es zu einem Fahrzeugbatterieabriss kommt, wenigstens eine Schaltschwelle aus einer im Steuergerät erzeugten Versorgungsspannung oder aus der Amplitude abgeleitet wird.

10. Verfahren nach Anspruch 9, **dadurch gekennzeichnet, dass** die wenigstens eine Schaltschwelle als Hysterese verwendet wird.

## Claims

1. Control device (SG) for actuating personal protection means (PS) for a vehicle (FZ), having an interface (TX2) for receiving at least one signal, the amplitude of which depends on the vehicle battery voltage (UB), provision being made of an actuation circuit (µC) which actuates the personal protection means (PS) on the basis of the at least one signal, the interface (TX2) having a circuit which, in order to detect the at least one signal in the case of autarky in the event of an accident in which a vehicle battery is pulled off, derives at least one switching threshold from a supply voltage (VAS) generated in the control device or from the amplitude.

2. Control device according to Claim 1, **characterized in that** a supply module generates the supply voltage (VAS) as a digital level.

3. Control device according to Claim 2, **characterized in that** the interface (TX2) forms an integrated circuit (ASIC) with the circuit and the supply module.

4. Control device according to one of the preceding claims, **characterized in that** the at least one switching threshold is generated at a first comparator (V1) by virtue of the supply voltage (VAS) being applied to an input of the first comparator (V1) via at least one first resistor (R32) and at least one first diode (D4), the vehicle battery voltage (UB) likewise being applied to this input.

5. Control device according to one of Claims 1 to 3, **characterized in that** provision is made of a second comparator (V3), to the first input of which the at least one switching threshold from the supply voltage (VAS) is applied, and **in that** provision is made of a third comparator (V2), at the first input of which the vehicle battery voltage (UB) is provided for the purpose of forming the at least one switching threshold.

6. Control device according to one of the preceding claims, **characterized in that** a hysteresis circuit is provided for the purpose of generating the at least one switching threshold.

7. Control device according to one of the preceding claims, **characterized in that** the interface has a pull-up circuit (R51, D51) for transmitting data.

8. Control device according to Claim 7, **characterized in that** the pull-up circuit passes the supply voltage to a transmission line by means of at least one second resistor and at least one second diode.

9. Method for actuating personal protection means (PS) for a vehicle (FZ), an interface (TX2) being used to receive at least one signal, an amplitude of the at least one signal depending on the vehicle battery voltage, and the personal protection means (PS) being actuated on the basis of the at least one signal, **characterized in that**, in order to detect the at least one signal in the case of autarky in the event of an accident in which a vehicle battery is torn off, at least one switching threshold is derived from a supply voltage generated in the control device or from the amplitude.

10. Method according to Claim 9, **characterized in that** the at least one switching threshold is used as hysteresis.

## Revendications

1. Appareil de commande (SG) destiné à commander des moyens de protection de personnes (PS) pour un véhicule (FZ), comportant une interface (TX2) servant à recevoir au moins un signal dont l'amplitude dépend de la tension de batterie de véhicule (UB), dans lequel il est prévu un circuit de commande (µC) qui commande les moyens de protection de personnes (PS) en fonction de l'au moins un signal, dans lequel l'interface (TX2) comprend un circuit qui, pour détecter l'au moins un signal, déduit en cas d'autarcie lors d'un accident conduisant à une destruction de la batterie du véhicule, un seuil de commutation à partir d'une tension d'alimentation (VAS) générée dans l'appareil de commande ou à partir de l'amplitude.

2. Appareil de commande selon la revendication 1, **caractérisé en ce qu'**un composant d'alimentation génère la tension d'alimentation (VAS) sous la forme d'un niveau numérique.

3. Appareil de commande selon la revendication 2, **caractérisé en ce que** l'interface (TX2) forme avec le circuit et le composant d'alimentation un circuit de commutation intégré (ASIC).

4. Appareil de commande selon l'une quelconque des revendications précédentes, **caractérisé en ce que** l'au moins un seuil de commutation est généré au niveau d'un premier comparateur (V1) en appliquant la tension d'alimentation (VAS) à une entrée du premier comparateur (V1) par l'intermédiaire d'au moins une première résistance (R32) et d'au moins une première diode (D4), dans lequel la tension de batterie de véhicule (UB) est également présente à ladite entrée.

5. Appareil de commande selon l'une quelconque des revendications 1 à 3, **caractérisé en ce qu'**il est prévu un deuxième comparateur (V3) à la première entrée duquel est présent l'au moins un seuil de commutation provenant de la tension d'alimentation (VAS) et **en ce qu'**il est prévu un troisième comparateur (V2) à la première entrée duquel la tension de batterie de véhicule (UB) est fournie pour établir l'au moins un seuil de commutation.

6. Appareil de commande selon l'une quelconque des revendications précédentes, **caractérisé en ce qu'**il est prévu un circuit d'hystérésis pour générer l'au moins un seuil de commutation.

7. Appareil de commande selon l'une quelconque des revendications précédentes, **caractérisé en ce que** l'interface comporte un montage d'excursion haute (R51, D51) pour l'envoi de données.

8. Appareil de commande selon la revendication 7, **caractérisé en ce que** le circuit d'excursion haute achemine la tension d'alimentation à une ligne de transmission au moyen d'au moins une deuxième résistance et d'au moins une deuxième diode.

9. Procédé de commande de moyens de protection de personnes (PS) pour un véhicule (FZ), dans lequel au moins un signal est reçu au moyen d'une interface (TX2), dans lequel une amplitude de l'au moins un signal dépend de la tension de batterie de véhicule, dans lequel les moyens de protection de personnes (PS) sont commandés en fonction de l'au moins un signal, **caractérisé en ce que**, pour détecter l'au moins un signal en cas d'autarcie lors d'un accident conduisant à la destruction de la batterie de véhicule, au moins un seuil de commutation est dérivé à partir d'une tension d'alimentation générée dans l'appareil de commande ou à partir de l'amplitude.

10. Procédé selon la revendication 9, **caractérisé en ce que** l'au moins un seuil de commutation est utilisé en tant qu'hystérésis.
